# EUROPÄISCHE PATENTANMELDUNG

(11) **EP 0 965 611 A1**
(43) Veröffentlichungstag der Anmeldung: **22.12.1999**
(21) Anmeldenummer: 98111364.0
(22) Anmeldetag: 19.06.1998
(51) Int. Cl.: C08K 3/00, A47K 3/04, C08G 18/08

(54) **Formteile aus Polyurethan, Verfahren zu deren Herstellung sowie plattenförmiges Halbzeug und wannenförmige Gegenstände, die unter Verwendung eines nach dem Verfahren hergestellten Polyurethanformteils erhältlich sind**

(71) Anmelder: Schwanekamp GmbH, 48712 Gescher (DE)
(72) Erfinder: Schwanekamp, Walter, 48712 Gescher (DE)
(74) Vertreter: Kahlhöfer, Hermann, Dipl.-Phys.

(57) **Zusammenfassung**

Die Erfindung betrifft Polyurethanformkörper, ein Verfahren zur Herstellung solcher Formteile aus Polyurethan, bei dem in mindestens zwei Schritten eine Polyisocyanatkomponente und eine Polyolkomponente oder deren Gemisch mit Natur- oder Kunststeinmehl oder deren Gemisch zu einem Reaktionsgemisch vermischt werden und anschließend das Reaktionsgemisch bei erhöhter Temperatur zur Reaktion gebracht und komprimiert wird, sowie Verbundmaterialien, die solche Polyurethanformkörper enthalten.

## Beschreibung

Die Erfindung betrifft ein Verfahren zur Herstellung von Polyurethanformkörpern, bei dem in mindestens zwei Schritten eine Polyisocyanatkomponente und eine Polyolkomponente oder deren Gemisch mit Glas-, Kunststein- oder Natursteinmehl oder einem Gemisch aus zwei oder mehr davon zu einem Reaktionsgemisch vermischt werden und anschließend das Reaktionsgemisch bei erhöhter Temperatur zur Reaktion gebracht und komprimiert wird.

Die Erfindung betrifft außerdem plattenförmiges Halbzeug und wannenförmige Gegenstände beispielsweise Fensterbänke oder Duschtassen, die unter Verwendung eines gemäß dem oben genannten Verfahren hergestellten Polyurethanformkörpers herstellbar sind.

Kunststofformteile aus Kunstharzen, beispielsweise aus Polyester-, Polyepoxid oder Polyurethanharzen, werden häufig zur Eigenschaftsmodifizierung mit fein gemahlenen mineralischen Füllstoffen vermischt. Zu modifizierende Eigenschaffen sind beispielsweise Gewicht, Temperaturbeständigkeit, Oberflächengüte, Versteifung oder thermische Eigenschaften wie Wärmeausdehnung. Der solche Eigenschaften verbessernde beziehungsweise verändernde mineralische Füllstoff enthält beispielsweise Kreide, Kalkstein, oder Marmor; die Hauptbestandteile solcher Stoffe sind Calciumcarbonat (CaCO₃). Ebenfalls als Füllstoffe geeignet sind jedoch auch Mineralmehle und -stäube, die wenig oder kein CaCO₃ enthalten. Hierzu zählen beispielsweise die mineralischen reinen oder gemischten Sulfate oder Oxide wie Talk, Ton, Glimmer, Calcium- oder Bariumsulfat und solche Bestandteile enthaltende gemischte Mineralien.

Bei der Verwendung stark CaCO₃-haltiger Füllstoffe ist zu beachten, daß Calciumcarbonat beim Erwärmen auf Temperaturen oberhalb 30°C zu brüchigem Aragonit modifiziert wird.

Es ist weiterhin bekannt, zur Herstellung von Stützkernen für Verbundplatten, ausgenommen PUR-Hartschaumplatten, einen anderen Füllstoff, nämlich Quarzsand oder -mehl zu verwenden. Hierzu ist der Füllstoff-Anteil aus ähnlichen Gründen begrenzt. Quarzmehl ist zwar höchst korrosionsbeständig, aber abrasiv, außerdem weist es stets Anteile mit Korndurchmessern unter 5 µm auf. Die Kleinen Partikel können zu gesundheitsschädlichem, silicogenen Feinstaub führen. Es sind daher strikte Unfallverhütungsvorschriften bei der Bearbeitung zu beachten.

Als Füllstoff geeigneter Feinstaub fällt jedoch in großer Menge bei der Massenherstellung von Steinerzeugnissen an. Eine Weiterverwertung dieses Feinstaubs ist daher von großer Wichtigkeit.

Gebrauchsgegenstände aus Dichten, spröden Materialien, beispielsweise aus Glas, Kunst- oder Naturstein, müssen häufig eine große Dicke aufweisen um plötzlich auftretenden, im wesentlichen punktuellen Beanspruchungen oder großen Temperaturgradienten zerstörungsfrei zu widerstehen. Beispiele für solche Gebrauchsgegenstände sind Küchenarbeitsplatten, Fensterbänke, Badewannen oder Duschtassen. Um solche Gegenstände beispielsweise gegenüber den oben genannten Beanspruchungen haltbar zu machen, werden die Gegenstände in der Regel aus Glas oder Kunst- oder Naturstein gefertigt, dessen Dicke ein bestimmtes Maß nicht unterschreiten darf. Nachteilig wirkt sich dabei jedoch aus, daß aufgrund der hohen Dichte solcher Materialien die Gegenstände zwangsläufig ein hohes Gewicht aufweisen.

Es war damit eine Aufgabe der vorliegenden Erfindung ein Verfahren zur Verfügung zu stellen, mit dem sich ein stabiler Gegenstand aus Natur- oder Kunststein mit geringem Gewicht herstellen läßt. Weiterhin war es eine Aufgabe der Erfindung ein Material zur Verfügung zu stellen, mit dem sich ein Gegenstand aus Natur- oder Kunststein herstellen läßt, der bei hoher Stabilität ein geringes Gewicht aufweist. Weiterhin war es Aufgabe der Erfindung Gegenstände, beispielsweise Plattenförmiges Halbzeug oder einen wannenförmigen Gegenstand zur Verfügung zu stellen, die durch das oben genannte Verfahren oder zumindest unter Verwendung des oben genannten Materials hergestellt werden können.

Weiterhin war es Aufgabe der Erfindung eine Glas-, Kunststein- oder Naturstein-Verbundplatte, beispielsweise eine Küchenarbeits- oder Bauverkleidungsplatte, oder Einrichtungsgegenstände, wie Duschtassen oder Fensterbänke, herzustellen, deren Glas-, Kunststein- oder Natursteinschicht relativ dünn ist und deren Trägerschicht (Stützschicht) so eingefärbt und angepaßt werden kann, daß ein weitgehend einheitliches Bild, insbesondere an den Seitenkanten, erzielbar ist.

Es wurde nun gefunden, daß Formteile aus Polyurethan, die nach einem bestimmten erfindungsgemäßen Verfahren erhältlich sind, die oben genannten Aufgaben als Trägerschicht (Stützschicht) lösen, wenn sie auf geeignete Weise mit Glas-, Kunststein- oder Natursteingegenständen kombiniert werden.

Gegenstand der Erfindung ist damit ein Formteil aus Polyurethan, erhältlich durch ein mindestens zwei Schritte a) und b) umfassendes Verfahren, bei dem
a) in Schritt a) einer Polyisocyanatkomponente oder einer Polyolkomponente, oder einem Gemisch aus beidem, 1 Gew.- % bis 99 Gew.- % (bezogen auf die Endmasse des fertigen Polyurethans) eines Füllstoffs enthaltend Glas-, Kunststein- oder Natursteinmehl oder ein Gemisch aus zwei oder mehr davon, beigemischt und
b) in Schritt b) ein die Polyisocyanatkomponente, die Polyolkomponente und den Füllstoff enthaltendes Reaktionsgemisch bei einer Temperatur zwischen 30°C und 120°C zur Reaktion gebracht und bei einem Druck von 7 MPa bis 14 Mpa komprimiert wird.

Unter einem "Formteil" wird im Rahmen des vorliegenden Textes ein Polyurethanformteil verstanden, wie es sich beispielsweise durch Anwendung einfacher Formen, Matrizen/Patrizen oder in-mold-Formungsverfahren, her-stellen läßt. Bei solchen Formteilen ist beispielsweise in Bezug auf das Gewicht und die mechanischen Eigenschaften eine vorteilhafte und sichere Verarbeitung möglich. Die Formteile können eine beliebige Raumform aufweisen, beispielsweise Platten- oder Wannenform.

Zur Herstellung des erfindungsgemäßen Formteils wird eine Polyisocyanatkomponente eingesetzt. Als Polyisocyanatkomponente kann ein einzelnes Polyisocyanat oder ein Gemisch aus zwei oder mehr Polyisocyanaten eingesetzt werden. Im Rahmen der vorliegenden Erfindung als Polyisocyanatkomponente geeignet sind beispielsweise aliphatische, cycloaliphatische oder aromatische Polyisocyanate oder ein Gemisch aus zwei oder mehr davon.

Die Polyisocyanatkomponente weist eine durchschnittliche NCO-Funktionalität von mindestens etwa 2 auf. Die durchschnittliche NCO-Funktionalität kann dabei eine gebrochen rationale Zahl sein, wenn die Polyisocyanatkomponente verschiedene Isocyanate mit unterschiedlicher Funktionalität enthält.

In einer bevorzugten Ausführungsform der vorliegenden erfindung beträgt die durchschnittliche NCO-Funktionalität etwa 2 bis etwa 6, beispielsweise etwa 2,1 bis etwa 4. Geeignet sind auch Polyisocyanatkomponenten mit einer zwischen diesen Werten liegenden NCO-Funktionalität von beispielsweise etwa 2,5 bis etwa 3,9 oder etwa 2,8 bis etwa 3,5.

In einer bevorzugten Ausführungsform der Erfindung wird als Polyisocyanat ein Polyisocyanat oder ein Gemisch aus zwei oder mehr Polyisocyanaten ausgewählt aus der Gruppe bestehend aus 1,5-Naphthylendiisocyanat, 4,4'-Diphenylmethandiisocyanat (MDI), hydriertes MDI (H₁₂MDI), Xylylendiisocyanat (XDI), Tetramethylxylylendiisocyanat (TMXDI), 4,4'-Diphenyldime-thylmethandiisocyanat, Di- und Tetraalkylendiphenylmethandiisocyanat, 4,4'-Dibenzyldiisocyanat, 1,3-Phenylendiisocyanat, 1,4-Phenylendiisocyanat, die 2,4- und 2,6-Isomeren des Toluylendiisocyanats (TDI), 1-Methyl-2,4-dii-socyanato-cyclohexan, 1,6-Diisocyanato-2,2,4-trimethylhexan, 1,6-Diisocyanato-2,4,4-trimethylhexan, 1-Isocyanatomethyl-3-isocyanato-1,5,5-trimethylcyclohexan (IPDI), chlorierten und bromierten Diisocyanaten, phosphorhaltigen Diisocyanaten, 4,4'Diisocyanatophenylperfluorethan, Tetramethoxybutan-1,4-diisocyanat, Butan-1,4-diisocyanat, Hexan-1,6-diisocyanat (HDI), Dicyclohexylmethandiisocyanat, Cyclohexan-1,4-diisocyanat, Ethylendiisocyanat, Phthalsäure-bisisocyanato-ethylester, 1-Chlormethylphenyl-2,4-diisocyanat, 1-Brommethylphe-nyl-2,6-diisocyanat, 3,3-Bis-chlormethylether-4,4'-diphenyldiisocyanat, Trimethylhexamethylendiisocyanat, 1,4-Diisocyanatobutan, 1,12-Diisocyanatododecan und Dimerfettsäurediisocyanat eingesetzt.

In einer weiteren bevorzugten Ausführungsform wird als Polyisocyanatkomponente 4,4'-Diphenylmethandiisocyanat (MDI), hydriertes MDI (H₁₂MDI), Xylylendiisocyanat (XDI), Tetramethylxylylendiisocyanat (TMXDI), die 2,4-und 2,6-Isomeren des Toluylendiisocyanats (TDI), 1-Isocyanatomethyl-3-isocyanato-1,5,5-trimethylcyclohexan (IPDI), Butan-1,4-diisocyanat, Hexan-1,6-diisocyanat (HDI), Dicyclohexylmethandiisocyanat oder Cyclohexan-1,4-dii-socyanat oder ein Gemisch aus zwei oder mehr davon eingesetzt.

Weiterhin als Polyisocyanatkomponente geeignet sind die Dimeren und Trimeren derivate der oben genannten Isocyanate wie sie beispielsweise durch Trimerisierung eines der oben genannten Isocyanate oder eines Gemischs aus zwei oder mehr davon erhältlich sind. Ebenfalls geeignet sind polymere Isocyanate, wie sie durch Umsetzung von mindestens difunktionellen Isocyanaten mit mindestens difunktionellen Alkoholen erhältlich sind.

Bei der Herstellung des erfindungsgemäßen Formteils werden in Schritt a) in einer bevorzugten Ausführungsform etwa 40 Gew.-% bis 85 Gew.-% (bezogen auf die Endmasse des fertigen Polyurethans) Glas,Kunststein- oder Natursteinmehl oder einem Gemisch aus zwei oder mehr davon, beigemischt.

Als Polyolkpomonente kann im Rahmen der vorliegenden Erfindung ein einzelnes Polyol oder ein Gemisch aus zwei oder mehr Polyolen eingesetzt werden.

Unter einem "Polyol" wird im Rahmen der vorliegenden Erfindung eine Verbindung oder ein Gemisch aus zwei oder mehr Verbindungen verstanden, das eine durchschnittliche OH-Funktionalität von mindestens etwa 2 aufweist.

Als Polyole im Rahmen der vorliegenden Erfindung sind beispielsweise niedermolekulare, mindestens difunktionelle Alkohole mit einem Molekulargewicht von etwa 62 bis etwa 300 einsetzbar. Beispielsweise sind dies Ethylenglykol, Diethylenglykol, Neopentylglykol, Hexandiol, Butandiol, Propylenglykol, Glycerin, Trimethylolpropan oder Zuckeralkohole wie Glucose oder Sorbit, 1,4- Hydroxymethylcyclohexan, 2-Methyl-1,3-propandiol, Butantriol1,2,4, Triethylenglykol, Tetraethylenglykol, Polyethylenglykol, Dipropylenglykol, Polypropylenglykol, Dibutylenglykol oder Polybutylenglykol oder ein Gemisch aus zwei oder mehr davon.

Ebenso als Polyolkomponente einsetzbar sind beispielsweise polyfunktionelle Alkohole mit einem Molekulargewicht von mehr als etwa 300 bis zu etwa 100.000. Hierzu zählen beispielsweise etwa Polyester-, Polyether- oder Polyacrylatpolyole.

Geeignete Polyesterpolyole sind beispielsweise durch Polykondensation herstellbar. So können di-, tri- oder höherfunktionelle Alkohole oder ein Gemisch aus zwei oder mehr davon, mit Dicarbonsäuren oder Tricarbonsäuren oder einem Gemisch aus zwei oder mehr davon, oder deren reaktiven Derivaten, zu Polyesterpolyolen kondensiert werden. Geeignete Dicarbonsäuren sind beispielsweise Bernsteinsäure und ihrer höheren Homologen mit bis zu 16 C-Atomen, ferner ungesättigte Dicarbonsäuren wie Maleinsäure oder Fumarsäure sowie aromatische Dicarbonsäuren, insbesondere die isomeren Phthalsäuren, wie Phthalsäure, Isophthalsäure oder Terephthalsäure. Als Tricarbonsäuren sind beispielsweise Zitronensäure oder Trimellithsäure geeignet.

Ebenfalls geeignete Polyesterpolyole umfassen beispielsweise die Umsetzungsprodukte von polyfünktionellen, vorzugsweise difunktionellen Alkoholen (gegebenenfalls zusammen mit geringen Mengen an trifunktionellen Alkoholen) und polyfurktionellen, vorzugsweise difunktionellen Carbonsäuren. Anstatt freier Polycarbonsäuren können (wenn möglich) auch die entsprechenden Polycarbonsäureanhydride oder entsprechende Polycarbonsäureester mit Alkoholen mit vorzugsweise 1 bis 3 C-Atomen zur Herstellung der Polyesterpolyole eingesetzt werden. Die Polycarbonsäuren können aliphatisch, cycloaliphatisch, aromatisch und/oder heterocyclisch sein. Sie können gegebenenfalls substituiert sein, beispielsweise durch Alkylgruppen, Alkenylgruppen, Ethergruppen oder Halogene. Als Polycarbonsäuren sind beispielsweise Bernsteinsäure, Adipinsäure, Korksäure, Azelainsäure, Sebacinsäure, Phthalsäure, Isophthalsäure, Terephthalsäure, Trimellithsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, Dimerfettsäure oder Trimerfettsäure oder Gemische aus zwei oder mehr davon geeignet.

Als Polyetherpolyole können im Rahmen der vorliegenden Erfindung beispielsweise Polyetherpolyole mit einem Molekulargewicht von etwa 300 oder mehr eingesetzt werden. Solche Polyetherpolyole werden in der Regel durch katalytisch unterstützte ringöffnende Polymerisation von Alkylenglykolen hergestellt.

Üblicherweise wird ausgehend von einem sogenannten Startermolekül polymerisiert. Als Startermoleküle eignen sich grundsätzlich alle Verbindungen die, gegebenenfalls in Anwesenheit eines geeigneten Katalysators, zur Ringöffnung von Epoxidringen in der Lage sind. Beispielsweise sind dies primäre, sekundäre oder tertiäre Amine, primäre, sekundäre oder tertiäre Alkohole, Thiole oder Carbonsäuren.

Die Polymerisation verläuft in der Regel unter basischer Katalyse. Im Rahmen der vorliegenden Erfindung werden beispielsweise Polyetherpolyole eingesetzt, wie sie durch Polymerisation von Ethylenoxid, gegebenenfalls im Gemisch mit C₃₋₁₂-Alkylenoxiden, erhältlich sind. Geeignet sind beispielsweise Polyethylenglykole mit einem Anteil an C₃- oder C₄-Einheiten, oder beidem, wie sie durch Copolymerisation von Ethylenoxid mit Propylenoxid oder Butylenoxid oder deren Gemisch erhältlich sind.

In einer bevorzugten Ausführungsform der Erfindung werden Polyetherpolyole eingesetzt, die unter Verwendung von primären, sekundären oder tertiären Alkoholen oder Gemischen aus zwei oder mehr davon als Startmoleküle hergestellt wurden.

Als Startmoleküle sind grundsätzlich alle mono- oder polyfünktionellen Alkohole oder deren Gemische, vorzugsweise werden im Rahmen der vorliegenden Erfindung jedoch Polyetherpolyole eingesetzt, die unter Verwendung eines zwei- oder dreiwertigen Alkohols, beispielsweise Ethylenglykol, Propylenglykol, Butylenglykol, Pentandiol, Hexandiol, Heptandiol, Octandiol sowie deren höhere Homologen, Neopentylglykol, Glycerin, Trimethylolpropan, Triethylolpropan, Pentaerythrit, Glucose, Sorbit, Mannit oder eines Gemischs aus zwei oder mehr davon als Startmolekül, hergestellt wurden.

Die im Rahmen des erfindungsgemäßen Verfahrens zur Herstellung der Formkörper einsetzbaren Polyetherpolyole weisen in der Regel ein Molekulargewicht (Mₙ) von mindestens etwa 5.00 vorzugsweise jedoch mindestens etwa 1.000 auf.

Die Obergrenze des Molekulargewichts liegt daher beispielsweise bei etwa 100.000, insbesondere bei bis zu etwa 50.000 oder darunter.

Die Polyetherpolyole können einzeln, d. h. als Polyadditionsprodukt mit üblicherweise bei basisch katalysierten Additionen von Alkylenoxiden an Wasser oder andere Startermolekule entstehenden Molekulargewichtsverteilungen eingesetzt werden. Es ist jedoch ebenfalls möglich, Gemische verschiedener Polyetherpolyole mit unterschiedlichen Molekulargewichtsverteilungen einzusetzen. Weiterhin ist es möglich, Polyetherpolyole einzusetzen, die durch Addition nur einer Alkylenoxidverbindung an ein Startermolekül entstehen. Es ist jedoch ebenfalls möglich Polyetherpolyole einzusetzen, die durch Addition verschiedener Alkylenoxide erhältlich sind. Es kann sich dabei sowohl um Block-Copolymere als auch um statistische Copolymere handeln.

Ebenfalls als Polyolkomponente sind OH-Gruppen tragende Polyacrylate (Polyacrylatpolyole). Solche Polyacrylatpolyole sind beispielsweise erhältlich durch Polymerisation von ethylenisch ungesättigten Monomeren, die OH-Gruppen tragen. Solche Monomeren sind beispielsweise durch die Veresterung von ethylenisch ungesättigten Carbonsäuren und difunktionellen Alkoholen erhältlich, wobei der Alkohol in der Regel nur in einem leichten Überschuß vorliegt. Hierzu geeignete, ethylenisch ungesättigte Carbonsäuren sind beispielsweise Acrylsäure, Methacrylsäure, Crotonsäure oder Maleinsäure. Entsprechende OH-Gruppen tragende Ester sind beispielsweise 2-Hydroxy-ethylacrylat, 2-Hydroxyethylmethacrylat, 2-Hydroxypropylacrylat, 2-Hydrox-ypropylacrylat, 2-Hydroxypropylmethacrylat, 3-Hydroxypropylacrylat oder 3-Hydroxypropylmethacrylat oder Gemische aus zwei oder mehr davon.

Die Polyisocyanatkomponente und die Polyolkomponente werden zur Herstellung der erfindungsgemäßen Formteile in einer solchen Menge vermischt, daß das Verhältnis von NCO- zu OH-Gruppen etwa 0,6 bis etwa 5, insbesondere etwa 0,8 bis etwa 2 beträgt.

In einer bevorzugten Ausführungsform der Erfindung wird ein zur Herstellung des erfindungsgemäßen Polyurethans ein Reaktionsgemisch eingesetzt, das aufgeschäumt wird, d.h., zur Bildung eines zelligen Schaumes mit offener oder geschlossener Zellstruktur Fähig ist.

Hierzu werden dem Reaktionsgemisch vor oder während der Reaktion beispielsweise Wasser, Treib- oder Blähmittel zugesetzt.

Als Treibmittel eignen sich beispielsweise alle niedermolekularen, bei der Reaktionstemperatur dampfförmigen Verbindungen, die gegenüber den reaktiven Komponenten im Reaktiorsgemisch inert sind. Beispielsweise sind dies lineare, verzweigte oder cyclische Kohlenwasserstoffe mit 3 bis etwa 5 C-Atomen wie Propan, Butan, Pentan oder Cyclopentan. Ebenfalls geeignet sind fluorierte oder chlorierte Kohlenwasserstoffe mit 1 bis etwa 3 C-Atomen. Prinzipiell sind zwar fluorierte und chlorierte Kohlenwasserstoffe ebenfalls geeignet, von deren Einsatz wird jedoch in der Regel aus ökologischen Gründen Abstand genommen.

Als Blähmittel eignen sich alle Verbindungen, die bei der Reaktionstemperatur eine gasförmige Verbindung, beispielsweise N₂ oder CO₂ abgeben und so zur Zellbildung beitragen. Beispiele für solche Verbindungen sind die Azo- und Diazoverbindungen.

Wenn Wasser als Treibmittel eingesetzt wird, kann es zweckmäßigerweise der Polyolkomponente vor der Mischung mit der Polyisocyanatkomponente zugegeben werden.

Die erfindungsgemäßen Formkörper können jedoch auch ohne den Einsatz von Wasser, Bläh- oder Treibmitteln hergestellt werden.

In einer besonderen Ausführungsform der Erfindung können der Polyisocyanatkomponente, der Polyolkomponente oder dem Reaktionsgemisch Füllmittel, Farbstoffe und dgl. bekannte Zusatzstoffe zugemischt werden.

In einer bevorzugten Ausführungsform der Erfindung wird bei der Herstellung des erfindungsgemäßen Formteils das Reaktionsgemisch in einer beheizten Form bei einer Temperatur zwischen 55°C und 80°C zum Aufschäumen gebracht und komprimiert.

In einer bevorzugten Ausführungsform wird die Kompression so durchgeführt, daß das aus dem Reaktionsgemisch entstehende Polyurethan einen Zellendurchmesser von weniger als 0,1 mm aufweist.

In einer weiteren bevorzugten Ausführungsform wird die Kompression des Reaktionsgemischs bis zu einer Dichte von höchstens 2,5 g/cm³ durchgeführt.

Als Füllstoff lassen sich im Rahmen der vorliegenden Erfindung beispielsweise Rohstoffe einsetzen, die relativ preiswert sind und praktisch als "Abfallstoffe" zur Verfügung stehen. Geeignet sind beispielsweise als Recyclingmaterial anfallendes Quarzmehl oder pulverisierter und getrockneter Steinschleifschlamm, wie er bei der Verarbeitung von Natursteinen anfällt und derzeit unter Kostenanfall entsorgt werden muß.

Ebenfalls als Füllstoff geeignet sind beispielsweise Kunststein- oder Natursteinmehle, wie sie im Rahmen anderer steinver- und -bearbeitender Verfahren anfallen, beispielsweise bei der Zerkleinerung von Steinen aus Bauschutt oder Erdaushub in Backenbrechern.

Grundsätzlich sind im Rahmen der vorliegenden Erfindung Steinmehle mit einer breiten Teilchengrößenverteilung einsetzbar. Die Teichengrößen können dabei einem Bereich von etwa 0,1 bis etwa 1000 µm liegen. In einer bevorzugten Ausführungsform der Erfindung weist das Natur oder Kunststeinmehl oder deren Gemisch jedoch eine Teichensiebgröße von etwa 1,0 bis etwa 250 µm auf.

In einer bevorzugten Ausführungsform der Erfindung wird als Füllmittel als Recyclingmaterial anfallendes Quarzmehl oder getrockneter Steinschleifschlamm oder feingemahlenes Silikatglas oder deren Gemisch eingesetzt.

Gegebenenfalls kann es zu einer unverträglichkeit zwischen Füllmittel und Reaktionsgemisch kommen. In solchen Fällen ist es empfehlenswert, die Füllmittel vor dem Zumischen mit einem Haftvermittler oder einem Gemisch aus zwei oder mehr Haftvermittlern, insbesondere mit einem Titalan oder einem Silan oder einem Gemisch aus zwei oder mehr davon, einer Oberflächenbehandlung zu unterziehen, so daß sie sich besser einmischen lassen und bei der Verarbeitung eine homogene und integrierte Anschnittfläche ergeben.

Häufig wird bei einem Einsatz der erfindungsgemäßen Formkörper auf eine bestimmte Flammschutzausrüstung Wert gelegt. In solchen Fällen ist es vorteilhaft, wenn de Polyisocyanatkomponente oder der Polyolkomponente oder dem Reaktionsgemisch ein organisches oder ein anorganisches Flammschutzmittel oder ein Gemisch aus zwei oder mehr davon, beispielsweise ein oder mehrere Phosphorsäureester oder Aluminiumhydroxidderivate oder ein Gemisch aus zwei oder mehr davon, in einer Menge von 0,5 bis 5,0 Gew. -% beigemischt werden.

Die Färbungen des Quarzteile sowie des Steinschleifschlamms können sich beispielsweise nach den zur Verarbeitung gelangenden Kunst- oder Natursteinen richten. Es sind schwarz-, rot- oder graugefärbte Quarzmehle und Steinschleifschlämme bekannt, so daß jeweils angepaßt an eine gewünschte Farbstellung der Formkörper eingefärbt werden kann. Als Füllmittel eignet sich weiterhin auch fein gemahlenes Silikatglas, das ebenfalls gefärbt und ungefärbt als Recyclingmaterial anfällt und verarbeitet werden kann.

Eine weitere Beimischungsmöglichkeit besteht darin, Farbpigmente wie Kamiumsulfide oder ähnliche Farbpigmente beizumischen, um von Steinfarben abweichende Farbtöne zu erzeugen, falls dies erforderlich ist oder gewünscht wird. Die Farbpigmente können in einer Menge von bis zu etwa 5 Gew.-% zugemischt werden.

Ebenfalls Gegenstand der vorliegenden Erfindung ist ein Verfahren zur Herstellung von Formteilen aus Polyurethan bei dem in mindestens zwei Schritten a) und b)
a) einer Polyisocyanatkomponente oder einer Polyolkomponente, oder einem Gemisch aus beidem, werden etwa 1 Gew. -% bis etwa 99 Gew.-% (bezogen auf die Endmasse des fertigen Schaumkunststoffes) eines Füllstoffs, enthaltend Natur- oder Kunststeinmehl oder deren Gemisch, beigemischt und
b) anschließend ein die Polyisocyanatkomponente, die Polyolkomponente und den Füllstoff enthaltendes Reaktionsgemisch bei einer Temperatur zwischen 30°C und 120°C zur Reaktion gebracht und bei einem Druck von 7 Mpa bis 14 MPa komprimiert wird.

Die bevorzugten Ausführungsformen des erfindungsgemäßen Verfahrens wurden im Rahmen des vorliegenden Textes bereits beschrieben.

Als besonders vorteilhaft hat sich bei den erfindungsgemäßen und nach dem erfindungsgemäßen Verfahren hergestellten Formkörpern erwiesen, daß sie zusammen mit einer Glas-, Kunststein- oder Natursteinplatte oder einem solchen Gegenstand beispielsweise zu Küchenarbeits- oder Verkleidungsplatten oder wannenförmigen Gegenständen verarbeitbar sind, die aus einer relativ dünnen Glas-, Kunststein- oder Natursteinschicht und einem erfindungsgemäßen Polyurethanformkörper als Trägerschicht (Stützschicht) bestehen. Solche Verbundgegenstände weisen eine größere Elastizität und ein im Vergleich zu massiven Gegenständen aus Glas-, Kunststein- oder Naturstein deutlich verkleinertes Gesamtgewicht auf. Das Gesamtgewicht läßt sich beispielsweise um etwa 40 bis 60 % gegenüber einer aus Marmor oder Granit bestehenden Platte verringern.

Von großem Vorteil ist auch, daß sich Reaktionsgemisch aus Polyisocyanatkomponente, Polyolkomponente, Füllstoffen und gegebenenfalls weiteren Zusatzstoffen bei der Verarbeitung zu Polyurethanformkörpern mit Glas, Kunststein- oder Natursteinsubstraten verbinden läßt, ohne daß grundsätzlich zusätzliche Klebstoffschichten eingesetzt werden müssen. Insbesondere ist vorteilhaft, wenn in einem in-mold-Verfahren das in der beheizten Form aufgeschäumte Reaktionsgemisch gießtechnisch mit einer Glas-, Kunststein- oder Natursteinplatte, beispielsweise aus Granit oder Marmor, oder mit einem aus Metall oder Holzwerkstoff bestehenden Substrat verbunden wird. Damit wird erreicht, daß ein weitgehend chemisch resistentes Steinimitat (der Polyurethanformkörper) mit einer Art Furnier (der Glas-, Kunststein- oder Natursteinplatte) verbunden werden kann, wobei vom Gewicht und vom Farbton her die Platte oder das Werkstück insgesamt kaum von einer massiven Platte unterschieden werden kann. Dabei kann das Substrat auch auf der dem Schaumkunststoff zugewandten Seite mit einem Relief versehen sein, so daß eine noch innigere Verbindung zwischen den beiden Stoffen gegeben ist. Es bietet sich an, solche Verbunde als Halbzeug herzustellen, die in späteren Verarbeitungsschritten unter endgültiger Formgebung den letztendlich gewünschten Gegenstand mit den gewünschten Abmessungen ergeben.

Ebenfalls Gegenstand der vorliegenden Erfindung ist daher ein plattenförmiges Halbzeug, das mindestens eine Glas-, Kunststein oder Natursteinschicht mit mindestens einer ersten und einer zweiten Seite aufweist, wobei die erste Seite mit einem erfindungsgemäßen Polyurethanformkörper oder einem gemäß dem erfindungsgemäßen Verfahren hergestellten Polyurethanformkörper fest verbunden ist.

In einer bevorzugten Ausführungsform der Erfindung ist die mit der mit dem Polyurethanformkörper fest in Verbindung stehende Seite der Glas-, Kunststein- oder Natursteinschicht mit einem Relief versehen.

Grundsätzlich lassen sich alle möglichen Glas-, Kunststein- oder Natursteinplatten zum erfindungsgemäßen Halbzeug verarbeiten, im Sinne einer möglichst großen Stabilität gepaart mit einer möglichst hohen Gewichtsersparnis sollten die Platten jedoch eine bestimmte Dicke nicht überschreiten. Vorzugsweise werden daher Glas-, Kunststein- oder Natursteinplatten einer Dicke zwischen 5 und 30 mm, vorzugsweise zwischen 7 und 25 mm, insbesondere zwischen 8 und 14 mm zu dem erfindungsgemäßen Halbzeug verarbeitet.

Aufgrund des wesentlich niedrigeren Gewichts des mit der Steinplatte verbundenen Polyurethanformkörpers kann die Dicke des Polyurethanformkörpers zwischen etwa 5 und etwa 300 mm, beispielsweise zwischen etwa 7 und etwa 100 mm betragen.

Soll eine besonders feste Verbindung zwischen Polyurethanformkörper und Steinplatte hergestellt werden, so kann zwischen der Glas-, Kunststein- oder Natursteinschicht und dem Polyurethanformkörper eine mit einem Klebstoff getränkte Verstärkungsmatte vorgesehen werden. Als Verstärkungsmatte ist beispielsweise ein Textil-, Metall- oder Glasfasergewebe oder Glasfaservlies geeignet.

Als Klebstoffe eignen sich übliche Klebstoffe, die eine feste stoffschlüssige Verbindung zwischen Polyurethanformkörper und Steinplatte herstellen.

Weitere mechanische Möglichkeiten zum festen Verbinden des Formkörpers und der Steinplatte bestehen beispielsweise darin, in der Steinplatte Ausnehmungen für mechanische Verankerungen einzuarbeiten oder in wenigstens einem Kantenbereich des Halbzeugs Leisten aus Glas, Kunst- oder Natursteinen anzusetzen, die sowohl das Aussehen verbessern als auch Stoßbelastungen aufnehmen können.

Ebenfalls Gegenstand der vorliegenden Erfindung ist ein Verfahren zur Herstellung von plattenförmigem Halbzeug, bei dem in einem in-mold-Verfahren das oben genannte Reaktionsgemisch mit einer Glas-, Kunststein- oder Natursteinplatte, beispielsweise aus Granit oder Marmor, oder mit einem aus Metall oder Holzwerkstoff bestehenden Substrat verbunden wird.

Alternativ dazu kann in einem gießtechnischen Verfahren das Reaktionsgemisch mit einer Glas-, Kunststein- oder Natursteinplatte, beispielsweise aus Granit oder Marmor, oder mit einem aus Metall oder Holzwerkstoff bestehenden Substrat vergossen werden.

Neben der Herstellung plattenförmiger Gegenstände lassen sich in einer Abwandlung des erfindungsgemaßen Verfahrens auch wannenförmige Gegen-stände mit einem Boden und mindestens einem umlaufenden Rand herstellen, die eine Glas-, Kunst- oder Natursteinoberfläche aufweisen.

Hierzu werden, ausgehend von einer Glas-, Kunststein- oder Natursteinplatte mit den bereits angegebenen Dickemaßen als Grundteil, der Boden und mindestens ein Rand durch umlaufendes abtragendes Zerschneiden eines Grundteils mit einem oder mehreren Schnitten, die gegenüber der Flächen-normalen des Grundteils einen Winkel aufweisen, so gebildet, daß Boden und Rand nach dem Zerschneiden relativ zueinander horizontal und vertikal verschieblich sind und sich zwischen Boden und Rand durch Verschieben entlang der Flächennormalen des Bodens gegeneinander eine keilförmige Verbindung erhalten läßt. Eine so erhältliche Wanne, beispielsweise eine Natursteinwanne, kann anschließend mit Hilfe des bereits für das plattenförmige Halbzeug beschriebenen Verfahrens mit einem Polyurethanformkörper als Stützschicht verbunden werden.

Gegenstand der Erfindung ist daher auch ein wannenförmiger Gegenstand, beispielsweise eine Duschtasse, mit einem Boden, der von mindestens einem umlaufenden Rand umgeben ist und einem unterhalb des Bodens und des Randes angeordneten erfindungsgemäßen oder nach einem erfindungsgemäßen Verfahren hergestellten Polyurethanformkörper, wobei
- der Boden und der Rand durch umlaufendes abtragendes Zerschneiden eines Grundteils mit einem oder mehreren Schnitten, die gegenüber der Flächennormalen des Grundteils einen Winkel aufweisen, so gebildet werden, daß Boden und Rand nach dem Zerschneiden relativ zueinander horizontal und vertikal verschieblich sind und sich zwischen Boden und Rand durch Verschieben entlang der Flächennormalen des Bodens gegeneinander eine keilförmige Verbindung erhalten läßt.

Das Grundteil kann aus Glas, Natur- oder Kunststein oder einem Gemisch aus zwei oder mehr davon bestehen oder diese Stoffe zumindest enthalten, vorzugsweise besteht das Grundteil jedoch aus Glas-, Kunststein- oder Naturstein. Der Schnitt oder die Schnitte werden in der Regel mittels Laser oder Wasserstrahl durchgeführt.

Der Schnitt oder die Schnitte können dabei in beliebigen Formen geführt werden, beispielsweise rund, oval als n-Eck mit beispielsweise 3, 4, 5, 6, oder mehr Ecken oder als Figur mit komplexeren Umrissen. Der abtragende Schnitt oder die abtragenden Schnitte werden beispielsweise so geführt, daß die Schnittbreite mindestens etwa 0,5 mm, vorzugsweise jedoch mindestens etwa 1 mm beträgt.

In einer bevorzugten Ausführungsform der Erfindung ist Stützschicht mit Boden und Rand stoffschlüssig verbunden. Ein solcher Stoffschluß ergibt sich beispielsweise durch die Adhäsion zwischen Polyurethanformkörper und der Stein- oder Glaswanne, er kann jedoch auch auf einer Verklebung zwischen Polyurethanformkörper und Stein- oder Glaswanne, beispielsweise mit einer mit Klebstoff getränkten Verstärkungsmatte beruhen. Als Verstärkungsmatte ist beispielsweise ein Textil-, Metall- oder Glasfasergewebe oder Glasfaservlies geeignet. Weiterhin kann eine Verbesserung der Verbindung zwischen Polyurethanformkörper und Stein- oder Glaswanne durch in die Wanne eingearbeitete Ausnehmungen für mechanische Verankerungen erreicht werden.

In einer bevorzugten Ausführungsform der Erfindung weist der Polyurethanformkörper über einen zentralen Querschnitt des wannenförmigen Gegenstands ein variierendes Dickeprofil auf.

Die Erfindung werden nachfolgend anhand von Beispielen und Figuren beschrieben.

Die Figuren zeigen im einzelnen:
- Fig. 1: einen Teil eines plattenförmigen Halbzeugs, hergestellt nach dem Verfahren gemäß Erfindung;
- Fig. 2: eine Kante einer Küchenarbeitsplatte;

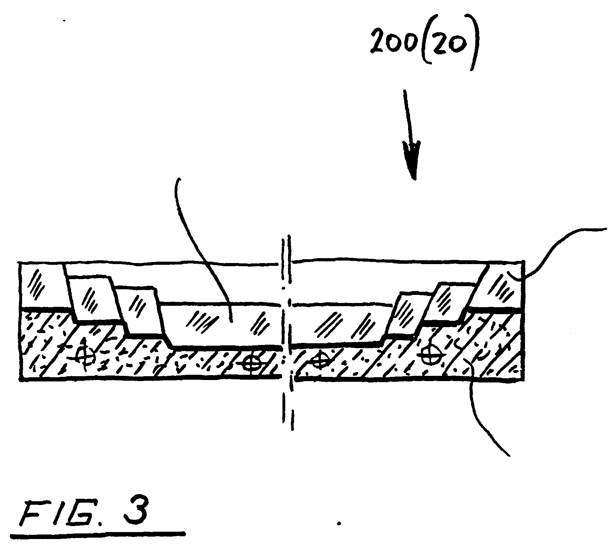

- Fig. 3: eine erfindungsgemäße muldenförmige Duschtasse, hergestellt nach dem Verfahren

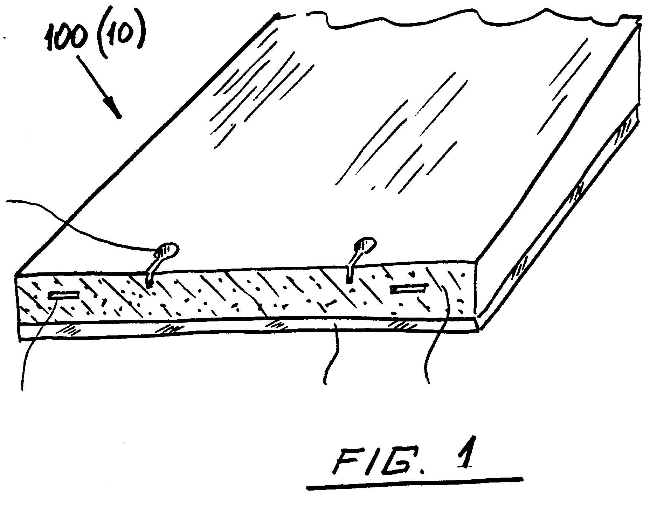

### Beispiel 1 (vgl. Fig. 1)

20 kg einer Polyisocianatkomponente werden mit 15 kg eines feinkörnigen Quarzmehls einer Teilchensiebgröße zwischen 1,0 und 25 µm homogen vermischt. Diesem Gemisch wird eine geeignete Polyolkomponente und gegebenenfalls Treib- oder Blähmittel in ausreichender Menge zugefügt. Die Masse wird in eine beheizte Form und dort zum Aufschäumen gebracht. Das aufgeschäumte Gemisch wird in der beheizten Form einem Druck von 10 MPa ausgesetzt, dabei wird die Bläschchengröße des Schaumstoffes relativ klein gehalten, so daß nach dem Ausschäumen und Aushärten das Gemisch eine Dichte von weniger als 2 g/cm³ aufweist.

Die Platte wird mit Hilfe einer Klebstoffschicht mit einer 10 mm dicken Granitschicht aus dunkelgefärbtem Granit fest verbunden.

### Beispiel 2

In eine beheizte Schäumform wird eine Platte aus hellem, rot gefärbten Porphyrgranit eingelegt. Der Polyisocianatkomponente gemäß Beispiel 1 wird eine Menge von 8 kg Steinschleifschlamm in rötlicher Färbung beigemischt und die Polyolkomponente hinzugefügt. Das Aufschäumen geschieht in der Form, in die bereits die Steinplatte eingelegt ist. Das auischäumende Material verbindet sich innig mit der Rückseite der Steinplatte und bildet einen ähnlich gefärbten Verbund aus geschäumtem Material und furnierartiger Steinplatte. Es wird dabei das aufgeschäumte Gemisch in der beheizten Form mit einem Druck von 12 MPa über eine Zeit von 25 Minuten behandelt.

### Beispiel 3

Einer Menge von 20 kg Polyisocianatkomponente werden 3 kg helles Quarzmehl und 3 kg fein gemahlenes weißes Silikatglas beigemischt. Ferner wird dem Gemisch als flammhemmender Füllstoff ein Aluminiurnhydroxyderivat in einer Menge von 0,5 kg beigefügt.

Vor dem Zufügen der Polyolkomponente wird eine homogene Mischung hergestellt. Dieser Mischung wird die Polyolkomponente hinzugefügt. Das Ausschäumen vollzieht sich in einer Form, in der eine auf der Rückseite durch Sandstrahl aufgerauhte Alabaster-Platte eingelegt ist. Der Polyurethanformkörper verbindet sich innig mit der aufgerauhten Fläche des Alabasters und bildet einen Schichtstoff, wie er in Fig. 1 dargestellt ist.

### Beispiel 4

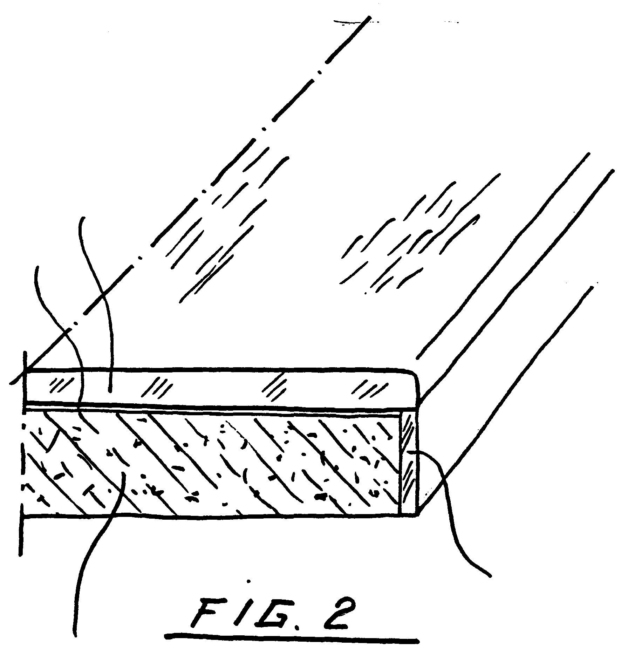

Zur Herstellung einer Waschtischablage wird ein Gemisch aus 10 kg Polyisocianatkomponente und 8 kg trockener, gemahlener Steinschleifschlamm aus dunklem Granit beigefügt. In einer Schäumform wird unter Druck dieses Material in-mold mit einer schwarzen, auf ihrer Rückseite teilweise aufgerauhten Graritplatte verbunden. Es ergibt sich durch die identische Färbung des Schleifmehls und der aufgelegten Platte ein sehr gleichmäßiges und einheitliches Aussehen des Halbzeuges. Dieses Aussehen wird dadurch noch verbessert, daß in die Form zusätzlich noch eine Kantenleiste aus demselben Material wie die Deckschicht aufgelegt wird. Es ergibt sich damit eine Konfiguration gem. Fig. 2.

### Beispiel 5

Zur Herstellung einer Duschtasse wird eine treppenartige Konfiguration eines geschlossenen Granitbeckens aus einzelnen Teilen nach dem oben angegebenen Verfahren erzeugt, die in gestülpt liegender Form mit einem ausschäumenden Polyurethan-Schaumkunststoff der Zusammensetzung 50 kg Polyisocianatkomponente mit 10 kg Kunststeinmehl` gewonnen aus Granitsägemehl, beigemischt werden, dem vor dem Aufschäumen noch die Polyolkomponente zugemischt wird.

In der Form bildet sich eine Rückenschicht, die sich mit allen Teilen des Granites sehr stark verbindet und auch stärkste Wärmeschwankungen übersteht.

Ein besonderer Vorteil derartiger Gegenstände liegt darin, daß der Polyurethanformkörper als Stützschicht eine hohe Wärmedämmung hat, die wesentlich größer ist als die des Steinmaterials in reiner Form, so daß sich die Duschtasse nicht "fußkait" anfühlt.

## Patentansprüche

**1.** Polyurethanformkörper, erhältlich durch ein mindestens zwei Schritte a) und b) umfassendes Verfahren, bei dem
a) in Schritt a) einer Polyisocyanatkomponente oder einer Polyolkomponente oder einem Gemisch aus beidem 1 Gew. -% bis 99 Gew.-% (bezogen auf die Endmasse des fertigen Polyurethans) eines Füllstoffs enthaltend Glas-, Kunststein- oder Natursteinmehl oder ein Gemisch aus zwei oder mehr davon, beigemischt und
b) in Schritt b) ein die Polyisocyanatkomponente, die Polyolkomponente und den Füllstoff enthaltendes Reaktionsgemisch bei einer Temperatur zwischen 30°C und 120°C zur Reaktion gebracht und bei einem Druck von 7 MPa bis 14 MPa komprimiert wird.

**2.** Polyurethanformkörper nach Anspruch 1, dadurch gekennzeichnet, daß das Reaktionsgemisch aufgeschäumt wird.

**3.** Polyurethanformkörper nach Anspruch 1 oder 2, dadurch gekennzeichnet, daß die Kompression des Reaktionsgemischs bis zu einer Dichte von höchstens 2,5 g/cm³ durchgeführt wird.

**4.** Polyurethanformkörper nach einem der Ansprüche 1 bis 3, dadurch gekennzeichnet, daß als Polyisocyanatkomponente ein Polyisocyanat ausgewählt aus der Gruppe bestehend aus 1 ,5-Naphthylendiisocyanat, 4,4'-Diphenylmethandiisocyanat (MDI), hydriertes MDI (H₁₂MDI), Xylylendiisocyanat (XDI), Tetramethylxyly-lendiisocyanat (TMXDI), 4,4'-Diphenyldimethylmethandiisocyanat, Di- und Tetraalkylendiphenylmethan diisocyanat, 4,4'-Dibenzyldiisocyanat` 1,3-Phenylendi-isocyanat 1,4-Phenylendiisocyanat, die Isomeren des Toluylendiisocyanats (TDI), 1-Methyl-2,4-diisocyanato-cyclohexan, 1,6-Diisocyanato-2,2,4-trimethylhexan, 1,6-Diisocyanato-2,4,4-trimethylhexan, 1-Isocyanatomethyl-3-isocyanato-1,5,5-trimethylcyclohexan (IPDI), chlorierten und bromierten Diisocyanaten, phosphorhaltigen Diisocyanaten, 4`4'Diisocyanatophenylperfluorethan, Tetramethoxybutan-1,4-di-isoryanat, Butan-1,4-diisocyanat, Hexan-1,6-diisocyanat (HDI), Dicyclohexylmethandiisocyanat, Cyclohexan- 1 ,4-dii-socyanat, Ethylendiisocyanat, Phthalsäure-bis-isocyanato-ethylester, 1-Chlormethylphenyl-2,4-diisocyanat, 1-Brommethylphenyl-2,6-diisocyanat, 3,3-Bis-chlormethylether-4,4'-diphenyldiisocyanat, Trimethylhexamethylendiisocyanat, 1,4-Diisocyanatobutan, 1,12-Diisocyanatododecan und Dimerfettsäurediisocyanat oder ein Gemisch aus zwei oder mehr davon, eingesetzt wird.

**5.** Polyurethanformkörper nach einem der Ansprüche 1 bis 4, dadurch gekennzeichnet, daß die Polyolkomponente eine durchschnittliche OH-Funktionalität von mehr als 2 aufweist.

**6.** Polyurethanformkörper nach einem der Ansprüche 1 bis 5, dadurch gekennzeichnet, daß Polyisocyanatkomponente und Polyolkomponente in einem NCO/OH-Verhältnis von 0,6 bis 5 eingesetzt werden.

**7.** Polyurethanformkörper nach einem der Ansprüche 1 bis 6, dadurch gekennzeichnet, daß als Füllmittel als Recyclingmaterial anfallendes Quarzmehl, getrockneter Steinschleifschlamm oder feingemahlenes Silikatglas oder ein Gemisch aus zwei oder mehr davon, eingesetzt wird.

**8.** Polyurethanformkörper nach einem der Ansprüche 1 bis 7, dadurch gekennzeichnet, daß die Füllmittel vor dem Zumischen mit Haftvermittler oder einem Gemisch aus zwei oder mehr Haftvermittlern, insbesondere mit Titalanen oder Silanen oder einem Gemisch aus zwei oder mehr davon, oberflächenbehandelt wurden.

**9.** Polyurethanformkörper nach einem der Ansprüche 1 bis 8, dadurch gekennzeichnet, daß der Polyisocyanatkoponente oder der Polyolkomponente oder dem Reaktionsgemisch organische oder anorganische Flammschutzmittel oder ein Gemisch aus zwei oder mehr davon, beispielsweise Phosphorsäureester oder Aluminiumhydroxidderivate, in einer Menge von 0,5 bis 5,0 Gew. -% beigemischt werden.

**10.** Polyurethanformkörper nach einem der Ansprüche 1 bis 9, dadurch gekennzeichnet, daß dem Gemisch oder Reaktionsgemisch Farbpigmente in einer Menge bis zu 5,0 Gew. -% beigemischt werden.

**11.** Verfahren zur Herstellung eines Polyurethanformkörpers bei dem in mindestens zwei Schritten a) und b)
a) einer Polyisocyanatkomponente oder einer Polyolkomponente oder einem Gemisch aus beidem werden 1 Gew.-% bis 99 Gew. -% (bezogen auf die Endmasse des fertigen Schaumkunststoffes) eines Füllstoffs, enthaltend Natur- oder Kunststeinmehl oder deren Gemisch, beigemischt und
b) anschließend ein die Polyisocyanatkomponente, die Polyolkomponente und den Füllstoff enthaltendes Reaktionsgemisch bei einer Temperatur zwischen 30°C und 120°C zur Reaktion gebracht und bei einem Druck von 7 MPa bis 14 MPa komprimiert wird.

**12.** Verfahren nach Anspruch 11, dadurch gekennzeichnet, daß das Reaktionsgemisch in einer beheizten Form zum Aufschäumen gebracht und komprimiert wird.

**13.** Verfahren nach Anspruch 11 oder 12, dadurch gekennzeichnet, daß das Reaktionsgemisch bei einer Temperatur zwischen 55°C und 80°C zur Reaktion gebracht wird.

**14.** Verfahren nach einem der Ansprüche 11 bis 13, dadurch gekennzeichnet, daß das Reaktionsgemisch zusätzlich Wasser, Treib- oder Blähmittel, oder ein Gemisch aus zwei oder mehr davon, enthält.

**15.** Plattenförmiges Halbzeug, das mindestens eine Glas-, Kunst- oder Natursteinschicht mit mindestens einer ersten und einer zweiten Seite aufweist, wobei die erste Seite mit einem Polyurethanformkörper gemäß einem der Ansprüche 1 bis 10 fest verbunden ist.

**16.** Plattenförmiges Halbzeug nach Anspruch 15, dadurch gekennzeichnet, daß die mit der mit dem Polyurethanformkörper in Verbindung stehende Seite der Glas-, Kunststein- oder Natursteinschicht ein Relief aufweist.

**17.** Plattenförmiges Halbzeug nach Anspruch 15 oder 16, dadurch gekennzeichnet, daß die Glas- Kunststein- oder Natursteinplatte eine Dicke zwischen 5 und 30 mm, vorzugsweise zwischen 7 und 25 mm, insbesondere zwischen 8 und 14 mm aufweist.

**18.** Plattenförmiges Halbzeug nach einem der Ansprüche 15 bis 17, dadurch gekennzeichnet, daß es zwischen der Glas-, Kunststein- oder Natursteinschicht und der Polyurethanformkörper eine mit einem Klebstoff getränkte Verstärkungsmatte aufweist.

**19.** Plattenförmiges Halbzeug nach einem der Ansprüche 15 bis 18, dadurch gekennzeichnet, daß es als Verstärkungsmatte ein Textil-, Metall- oder Glasfasergewebe oder Glasfaservlies aufweist.

**20.** Plattenförmiges Halbzeug nach einem der Ansprüche 15 bis 19, dadurch gekennzeichnet, daß in der Glas-, Kunststein- oder Natursteinplatte Ausnelunungen für mechanische Verankerungen eingearbeitet sind.

**21.** Plattenförmiges Halbzeug nach einem der Ansprüche 15 bis 20, dadurch gekennzeichnet, daß in wenigstens einem Kantenbereich des Halbzeugs Leisten aus Glas, Kunst- oder Naturstein angesetzt sind.

**21.** Verfahren zur Herstellung von plattenförmigem Halbzeug bei dem ein Reaktionsgemisch gemäß Anspruch 1 oder 10 mit einer Glas-, Kunststein- oder Natursteinplatte, beispielsweise aus Granit oder Marmor, oder mit einem aus Metall oder Holzwerkstoff bestehenden Substrat vergossen wird.

**22.** Wannenförmiger Gegenstand, beispielsweise Duschtasse, mit einem Boden, der von mindestens einem umlaufenden Rand umgeben ist und einem unterhalb des Bodens und des Randes angeordneten Polyurethanformkörper gemäß einem der Ansprüche 1 bis 10 als Stützschicht, wobei
- der Boden und der Rand durch umlaufendes abtragendes Zerschneiden eines plattenförmigen Grundteils aus Glas, Natur- oder Kunststein mit einem oder mehreren Schnitten, die gegenüber der Flächennormalen des Grundteils einen Winkel aufweisen, so gebildet werden, daß Boden und Rand nach dem Zerschneiden relativ zueinander horizontal und vertikal verschieblich sind und sich zwischen Boden und Rand durch Verschieben entlang der Flächennormalen des Bodens gegeneinander eine keilförmige Verbindung erhalten läßt.

**23.** Wannenförmiger Gegenstand nach Anspruch 22, dadurch gekennzeichnet, daß der Schnitt oder die Schnitte mittels Laser oder Wasserstrahl erhalten werden.

**24.** Wannenförmiger Gegenstand nach Anspruch 22 oder 23, dadurch gekennzeichnet, daß die Schnittbreite mindestens 1 mm beträgt.

**25.** Wannenförmiger Gegenstand nach einem der Ansprüche 22 bis 24, dadurch gekennzeichnet, daß die Stützschicht mit Boden und Rand stoffschlüssig verbunden ist.

**26.** Wannenförmiger Gegenstand nach einem der Ansprüche 22 bis 25, dadurch gekennzeichnet, daß die Stützschicht über einen zentralen Querschnitt ein variierendes Dickeprofil aufweist.
